# EUROPEAN PATENT APPLICATION

(11) **EP 3 840 166 A1**
(43) Date of publication of application: **23.06.2021**
(21) Application number: 19219032.0
(22) Date of filing: 20.12.2019
(51) Int. Cl.: H02J 7/00, A24F 40/53

(54) **AEROSOL DELIVERY DEVICE/SYSTEM**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

The present disclosure relates to an aerosol delivery device, comprising:
a power source having a charge level; a controller configured to perform a boot sequence when the charge level of the power source is below a predetermined level; and a user feedback unit wherein the controller is configured to cause the user feedback unit to output feedback:
a) when the boot sequence initiates; and/or
b) during the boot sequence; and/or
c) when the boot sequence completes.

## Description

### Technical field

The present disclosure relates to an aerosol delivery device and an aerosol delivery system such as a smoking substitute device/system.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful by-products. There have been proposed various smoking substitute systems in order to avoid the smoking of tobacco.

Such smoking substitute systems can form part of nicotine replacement therapies aimed at people who wish to stop smoking and overcome a dependence on nicotine.

Smoking substitute systems, which may also be known as electronic nicotine delivery systems, may comprise electronic systems that permit a user to simulate the act of smoking by producing an aerosol, also referred to as a "vapour", which is drawn into the lungs through the mouth (inhaled) and then exhaled. The inhaled aerosol typically bears nicotine and/or flavourings without, or with fewer of, the odour and health risks associated with traditional smoking.

In general, smoking substitute systems are intended to provide a substitute for the rituals of smoking, whilst providing the user with a similar experience and satisfaction to those experienced with traditional smoking and tobacco products.

The popularity and use of smoking substitute systems has grown rapidly in the past few years. Although originally marketed as an aid to assist habitual smokers wishing to quit tobacco smoking, consumers are increasingly viewing smoking substitute systems as desirable lifestyle accessories. Some smoking substitute systems are designed to resemble a traditional cigarette and are cylindrical in form with a mouthpiece at one end. Other smoking substitute systems do not generally resemble a cigarette (for example, the smoking substitute device may have a generally box-like form).

There are a number of different categories of smoking substitute systems, each utilising a different smoking substitute approach. A smoking substitute approach corresponds to the manner in which the substitute system operates for a user.

One approach for a smoking substitute system is the so-called "vaping" approach, in which a vaporisable liquid, typically referred to (and referred to herein) as "e-liquid", is heated by a heater to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerine.

A typical vaping smoking substitute system includes a mouthpiece, a power source (typically a battery), a tank or liquid reservoir for containing e-liquid, as well as a heater. In use, electrical energy is supplied from the power source to the heater, which heats the e-liquid to produce an aerosol (or "vapour") which is inhaled by a user through the mouthpiece.

Vaping smoking substitute systems can be configured in a variety of ways. For example, there are "closed system" vaping smoking substitute systems which typically have a heater and a sealed tank which is pre-filled with e-liquid and is not intended to be refilled by an end user. One subset of closed system vaping smoking substitute systems include a device which includes the power source, wherein the device is configured to be physically and electrically coupled to a component including the tank and the heater. In this way, when the tank of a component has been emptied, the device can be reused by connecting it to a new component. Another subset of closed system vaping smoking substitute systems are completely disposable, and intended for one-use only.

There are also "open system" vaping smoking substitute systems which typically have a tank that is configured to be refilled by a user, so the system can be used multiple times.

An example vaping smoking substitute system is the myblu™ e-cigarette. The myblu™ e cigarette is a closed system which includes a device and a consumable component. The device and consumable component are physically and electrically coupled together by pushing the consumable component into the device. The device includes a rechargeable battery. The consumable component includes a mouthpiece, a sealed tank which contains e-liquid, as well as a vaporiser, which for this system is a heating filament coiled around a portion of a wick which is partially immersed in the e-liquid. The system is activated when a microprocessor on board the device detects a user inhaling through the mouthpiece. When the system is activated, electrical energy is supplied from the power source to the vaporiser, which heats e-liquid from the tank to produce a vapour which is inhaled by a user through the mouthpiece.

Another example vaping smoking substitute system is the blu PRO™ e-cigarette. The blu PRO™ e cigarette is an open system which includes a device, a (refillable) tank, and a mouthpiece. The device and tank are physically and electrically coupled together by screwing one to the other. The mouthpiece and refillable tank are physically coupled together by screwing one into the other, and detaching the mouthpiece from the refillable tank allows the tank to be refilled with e-liquid. The system is activated by a button on the device. When the system is activated, electrical energy is supplied from the power source to a vaporiser, which heats e-liquid from the tank to produce a vapour which is inhaled by a user through the mouthpiece.

An alternative to the "vaping" approach is the so-called Heated Tobacco ("HT") approach in which tobacco (rather than an e-liquid) is heated or warmed to release vapour. HT is also known as "heat not burn" ("HNB"). The tobacco may be leaf tobacco or reconstituted tobacco. In the HT approach the intention is that the tobacco is heated but not burned, i.e. the tobacco does not undergo combustion.

The heating, as opposed to burning, of the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

A typical HT smoking substitute system may include a device and a consumable component. The consumable component may include the tobacco material. The device and consumable component may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable component (entrained in the airflow) from the location of vaporization to an outlet of the component (e.g. a mouthpiece), the vapour cools and condenses to form an aerosol for inhalation by the user. The aerosol may contain nicotine and/or flavour compounds. As a user uses the device, the power source loses charge. As the power source approaches a 0% charge level, an operating system of the device may shut down. The device must therefore be appropriately re-started.

Accordingly, there is a need for an improved aerosol delivery device/system which addresses at least some of the problems of the known devices and systems.

### Summary

According to a first aspect, there is provided an aerosol delivery device (e.g. a smoking substitute device) comprising:
a power source having a charge level;
a controller configured to perform a boot sequence when the charge level of the power source is below a predetermined level; and
a user feedback unit
wherein the controller is configured to cause the user feedback unit to output feedback:
a) when the boot sequence initiates; and/or
b) during the boot sequence; and/or
c) when the boot sequence completes.

Such a device is advantageously able to suitably re-boot and provide feedback to a user that the device is re-booting. By providing output feedback to the user at a particular stage of the boot sequence, the user can be informed of exactly which stage of the boot sequence the controller is performing. By providing an output feedback at any one or all of the stages of the boot sequence, the user can be informed that the boot sequence is advancing through its stages as required.

Optional features will now be set out. These are applicable singly or in any combination with any aspect.

The controller may be configured to initiate the boot sequence when the power source is connected to an electrical power supply.

The controller is configured to initiate the boot sequence when the power source is below a predetermined charge level. In preferred embodiments, the controller is configured to initiate the boot sequence when the power source is at a zero percent charge level.

The device includes a controller configured to cause the feedback unit to output feedback as it detects the device is performing a boot sequence.

The controller is configured to perform a boot sequence. In particular, the controller may be configured to initiate the boot sequence, carry out the boot sequence and complete the boot sequence.

The user feedback unit may include a visual element, for example one or more lights e.g. an LED or multiple/an array of LEDs. The user feedback unit may include a haptic element for providing haptic feedback to the user. The haptic element may comprise a vibration element such as an eccentric rotating mass (ERM) actuator, a linear resonant actuator (LRA) or a piezoelectric actuator.

The user feedback unit may include both a visual element and a haptic element.

The controller may be configured to cause the visual element to output feedback (i.e. to illuminate) at any one of the boot sequence stages (i.e. the controller may be configured to cause the visual element to illuminate when the controller initiates the boot sequence and/or during the boot sequence and/or when the controller completes the boot sequence). Preferably, the controller may be configured to cause the visual element to illuminate when the controller initiates the boot sequence and during the boot sequence.

The controller may be configured to cause the visual element to illuminate at a maximum intensity (or 100% of the visual element's intensity capability) when the controller initiates the boot sequence and/or during the boot sequence and/or when the boot sequence completes.

The controller may be configured to cause the visual element to illuminate in a pulsed or flashing operation when the controller initiates the boot sequence and/or during the boot sequence and/or when the boot sequence completes. The visual element may be configured to illuminate in a pulsed or flashing operation at intervals of a predetermined number of seconds, for example at 1 or 2 or 3 or 4 or 5 second intervals. The controller may be configured to cause the visual element to illuminate in a pulsed of flashing operation at intervals of a predetermined number of seconds (e.g. at 3 second intervals).

Preferably, the controller is configured to cause the visual element to illuminate in a pulsed/flashing operation (e.g. at 3 second intervals) when the controller initiates the boot sequence and during the boot sequence. This advantageously allows the user to know that the boot sequence has initiated and that the boot sequence is being carried out.

The controller may be configured to cause the visual element to illuminate with varying (e.g. increasing or decreasing) intensity. For example the visual element may be configured to illuminate with increasing intensity from 0% to 100% of the visual element's intensity capability. The visual element may be configured to illuminate with increasing intensity (e.g. from 0% to 100% of its intensity capability) during a single pulse.

The controller may be configured to cause the visual element to illuminate (e.g. in a pulsed operation and with an increasing intensity of 0-100% at each pulse) during the boot sequence and until completion of the boot sequence.

The controller may be configured to terminate feedback output from the visual element when the controller completes the boot sequence. This advantageously allows the user to know that the boot sequence has completed.

The visual element may be coloured (e.g. blue).

The controller may be configured to cause the haptic element to output feedback (e.g. to vibrate) when the boot sequence initiates and/orduring the boot sequence and/orwhen the boot sequence completes.

The controller may be configured to cause the haptic element to vibrate for a predetermined length of time (i.e. a predetermined number of seconds), for example no more than 5 seconds, preferably no more than 2 seconds. The controller may be configured to cause the haptic element to emit a vibration pulse or burst (e.g. a single or multiple vibration pulse(s)).

The controller may be configured to cause the haptic element to emit a vibration pulse when the boot sequence initiates and/or when the boot sequence completes. This advantageously allows the user to know that the boot sequence has initiated and/or that the boot sequence has completed. In particular, this provides a positive physical indication to the user that the boot sequence has initiated and/or completed.

The power source may be a battery e.g. a rechargeable battery. The source of power may be a capacitor.

The device may comprise a device body for housing the power source and/or other electrical components. The device body may be an elongate body i.e. with a greater length than depth/width. It may have a greater width than depth.

The device body may have a length of between 5 and 30 cm e.g. between 10 and 20 cm such as between 10 and 13 cm. The maximum depth of the device body may be between 5 and 30 mm e.g. between 10 and 20 mm.

The device body may have a front surface that is curved in the transverse dimension. The device body may have a rear surface that is curved in the transverse dimension. The curvatures of the front surface and rear surface may be of the opposite sense to one another. Both front and rear surfaces may be convex in the transverse dimension. They may have an equal radius of curvature.

The radius of curvature of the front surface may be between 10 and 50 mm, preferably between 10 and 40 mm, preferably between 10 and 30 mm, preferably been 10 and 20 mm, more preferably between 10 and 15 mm, more preferably substantially 13.5 mm.

The front and rear surfaces may meet at opposing transverse edges of the device body. This leads to a mandorla-/lemon-/eye-shaped cross sectional shape of the device body.

The transverse edges may have a radius of curvature that is significantly smaller than the radius of curvature of either the front or rear surface. This leads to the transverse edges being substantially "pointed" or "sharp". The transverse edges may have a radius of curvature in the transverse dimension of less than 10 mm, preferably less than 5 mm, preferably less than 2 mm, preferably less than 1 mm.

The transverse edges may extend substantially the full longitudinal length of the device body. However, in some embodiments, the transverse edges may only extend along a longitudinal portion of the device body.

The device body may have a curved longitudinal axis i.e. curved in a direction between the front and rear faces.

The visual element may be at the front and/or rear surface of the device body.

In some embodiments, the device body may include an illumination region configured to allow light provided by the visual element (e.g. one or more LEDs) within the device body to shine through.

A memory may be provided and may be operatively connected to the controller. The memory may include non-volatile memory. The memory may include instructions which, when implemented, cause the controller to perform certain tasks or steps of a method. The device may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

An airflow (i.e. puff) sensor may be provided that is configured to detect a puff (i.e. inhalation from a user). The airflow sensor may be operatively connected to the controller so as to be able to provide a signal to the controller that is indicative of a puff state (i.e. puffing or not puffing). The airflow sensor may, for example, be in the form of a pressure sensor or an acoustic sensor. The controller may control power supply to a heating element in response to airflow detection by the sensor. The control may be in the form of activation of the heating element in response to a detected airflow. The airflow sensor may form part of the device. The heating element may be used in a vaporiser to vaporise an aerosol precursor. The vaporiser may be housed in a vaporising chamber.

In a second aspect, there is provided an aerosol delivery system comprising a device according to the first aspect and a component for containing an aerosol precursor.

The component may be an aerosol-delivery (e.g. a smoking substitute) consumable i.e. in some embodiments the component may be a consumable component for engagement with the aerosol-delivery (e.g. a smoking substitute) device to form the aerosol-delivery (e.g. s smoking substitute) system.

The device may be configured to receive the consumable component. The device and the consumable component may be configured to be physically coupled together. For example, the consumable component may be at least partially received in a recess of the device, such that there is snap engagement between the device and the consumable component. Alternatively, the device and the consumable component may be physically coupled together by screwing one onto the other, or through a bayonet fitting.

Thus, the consumable component may comprise one or more engagement portions for engaging with the device.

The consumable component may comprise an electrical interface for interfacing with a corresponding electrical interface of the device. One or both of the electrical interfaces may include one or more electrical contacts (which may extend through the transverse plate of the lower portion of the insert). Thus, when the device is engaged with the consumable component, the electrical interface may be configured to transfer electrical power from the power source to a heating element of the consumable component. The electrical interface may also be used to identify the consumable component from a list of known types. The electrical interface may additionally or alternatively be used to identify when the consumable component is connected to the device.

The device may alternatively or additionally be able to detect information about the consumable component via an RFID reader, a barcode or QR code reader. This interface may be able to identify a characteristic (e.g. a type) of the consumable. In this respect, the consumable component may include any one or more of an RFID chip, a barcode or QR code, or memory within which is an identifier and which can be interrogated via the interface.

In other embodiments, the component may be integrally formed with the aerosol-delivery (e.g. a smoking substitute) device to form the aerosol-delivery (e.g. s smoking substitute) system.

In such embodiments, the aerosol former (e.g. e-liquid) may be replenished by re-filling a tank that is integral with the device (rather than replacing the consumable). Access to the tank (for re-filling of the e-liquid) may be provided via e.g. an opening to the tank that is sealable with a closure (e.g. a cap). The smoking substitute system may comprise an airflow path therethrough, the airflow path extending from an air inlet to an outlet. The outlet may be at a mouthpiece portion of the component. In this respect, a user may draw fluid (e.g. air) into and along the airflow path by inhaling at the outlet (i.e. using the mouthpiece).

The airflow path passes the vaporiser between the air inlet to the air outlet.

The airflow path may comprise a first portion extending from the air inlet towards the vaporiser. The second portion of the airflow path passes through the vaporising chamber to a conduit that extends to the air outlet. The conduit may extend along the axial centre of the component.

References to "downstream" in relation to the airflow path are intended to refer to the direction towards the air outlet/outlet portion. Thus the second and third portions of the airflow path are downstream of the first portion of the airflow path. Conversely, references to "upstream" are intended to refer to the direction towards the air inlet. Thus the first portion of the airflow path (and the air inlet) is upstream of the second/third portions of the airflow path (and the air outlet/outlet portion).

References to "upper", "lower", "above" or "below" are intended to refer to the component when in an upright/vertical orientation i.e. with elongate (longitudinal/length) axis of the component vertically aligned and with the mouthpiece vertically uppermost.

The component may comprise a tank for housing the aerosol precursor (e.g. a liquid aerosol precursor). The aerosol precursor may comprise an e-liquid, for example, comprising a base liquid and e.g. nicotine. The base liquid may include propylene glycol and/or vegetable glycerine.

At least a portion of one of the walls defining the tank may be translucent or transparent.

The conduit may extend through the tank with the conduit walls defining an inner region of the tank. In this respect, the tank may surround the conduit e.g. the tank may be annular.

As discussed above, the air flow path passes the vaporiser between the air inlet to the air outlet. The vaporiser may comprise a wick e.g. an elongate wick which may have a cylindrical shape.

The wick may be oriented so as to extend in the direction of the width dimension of the component (perpendicular to the longitudinal axis of the component). Thus the wick may extend in a direction perpendicular to the direction of airflow in the airflow path.

The vaporiser may be disposed in the vaporising chamber. The vaporising chamber may form part of the airflow path.

The wick may comprise a porous material. A portion of the wick may be exposed to airflow in the airflow path. The wick may also comprise one or more portions in contact with liquid aerosol precursor stored in the tank. For example, opposing ends of the wick may protrude into the tank and a central portion (between the ends) may extend across the airflow path so as to be exposed to airflow. Thus, fluid may be drawn (e.g. by capillary action) along the wick, from the tank to the exposed portion of the wick.

The heating element may be in the form of a filament wound about the wick (e.g. the filament may extend helically about the wick). The filament may be wound about the exposed portion of the wick. The heating element is electrically connected (or connectable) to the power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in airflow along the airflow path. This vapour may subsequently cool to form an aerosol e.g. in the conduit.

In a third aspect there is provided a method of using the aerosol-delivery (e.g. smoking substitute) system according to the second aspect, the method comprising engaging the consumable component with an aerosol-delivery (e.g. smoking substitute) device (as described above) having a power source so as to electrically connect the power source to the consumable component (i.e. to the vaporiser of the consumable component).

According to a fourth aspect, there is provided a method of controlling an aerosol delivery device, the method including the steps of:
performing a boot sequence
causing a user feedback unit to output feedback:
   a) when the boot sequence initiates; and/or
   b) during the boot sequence; and/or
   c) when the boot sequence completes.

The method may include detecting the charge level of a power source of the device.

The method may include providing the user feedback unit with a visual element and causing the visual element of the user feedback unit to illuminate when the boot sequence initiates, and/or during the boot sequence and/or when the boot sequence completes.

The method may including causing the visual element to illuminate at a maximum intensity (or 100% of the visual element's intensity capability). The method may include causing the visual element to illuminate in a pulsed or flashing operation. The method may include causing the visual element to illuminate in a pulsed or flashing operation at intervals of a predetermined number of seconds (for example at 1 or 2 or 3 or 4 or 5 second intervals) when the controller initiates boot sequence and/or during boot sequence and/or when the controller completes boot sequence.

The method may include causing the visual element to illuminate with varying (e.g. increasing or decreasing) intensity. For example the method may comprise causing the visual element to illuminate with increasing intensity from 0% to 100% of the visual element's intensity capability. The method may comprise causing the visual element to illuminate with increasing intensity (e.g. from 0% to 100% of its intensity capability) during a single pulse.

The method may comprise causing the visual element to illuminate (e.g. in a pulsed operation and with increasing intensity of 0-100% at each pulse) during the boot sequence and until completion of the boot sequence. The method may comprise terminating feedback output from the visual element when the boot sequence completes.

The method may comprise providing the user feedback unit with a haptic element and causing the haptic element to output feedback (e.g. to vibrate) when the boot sequence initiates and/or during the boot sequence and/or when the boot sequence completes.

The method may comprise causing the haptic element to vibrate for a predetermined length of time, for example no more than 5 seconds, preferably no more than 2 seconds. The method may comprise causing the haptic element to emit a vibration pulse (e.g. a single or multiple vibration pulse(s)) or burst.

The method may comprise causing the haptic element to vibrate at any stage of the boot sequence. For example the method may comprise causing the haptic element to vibrate during the boot sequence. Preferably, the method comprises causing the haptic element to emit a vibration pulse when the boot sequence initiates and/or when the boot sequence completes.

The boot sequence may include loading an operating system or a start-up process/service of the device to the memory.

The invention includes the combination of the aspects and preferred features described except where such a combination is clearly impermissible or expressly avoided.

### BRIEF DESCRIPTION OF THE DRAWINGS

So that further aspects and features thereof may be appreciated, embodiments will now be discussed in further detail with reference to the accompanying figures, in which:
- Fig. 1A is a front schematic view of a smoking substitute system;
- Fig. 1B is a front schematic view of a device of the system;
- Fig. 1C is a front schematic view of a component of the system;
- Fig. 2A is a schematic of the components of the device;
- Fig. 2B is a schematic of the components of the component;
- Fig. 3 is a section view of the component;
- Fig. 4 is a perspective view of the device;
- Fig. 5 is a schematic cross-section of the device;
- Fig. 6 is a diagram of steps performed by the device.

### DETAILED DESCRIPTION OF THE EMBODIMENTS

Aspects and embodiments will now be discussed with reference to the accompanying figures. Further aspects and embodiments will be apparent to those skilled in the art.

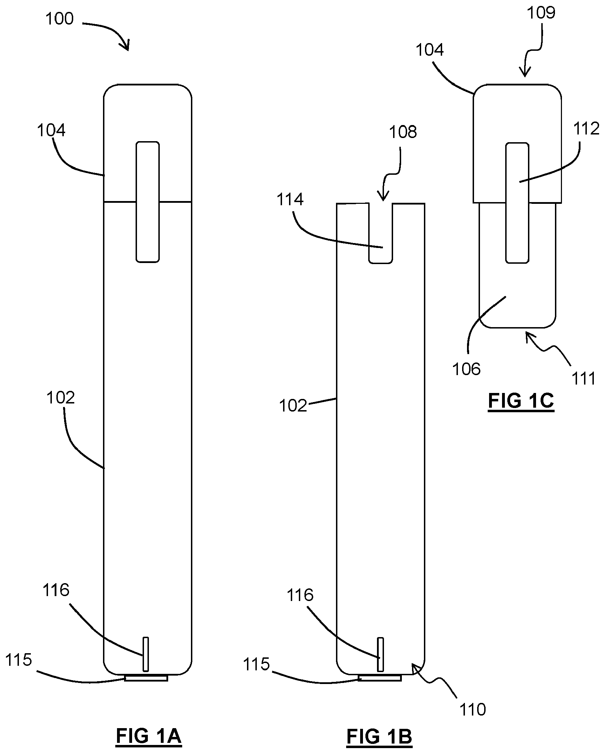

Fig. 1A shows a first embodiment of a smoking substitute system 100. In this example, the smoking substitute system 100 includes a device 102 and a component 104. The component 104 may alternatively be referred to as a "pod", "cartridge" or "cartomizer". It should be appreciated that in other examples (i.e. open systems), the device may be integral with the component. In such systems, a tank of the aerosol delivery system may be accessible for refilling the device.

In this example, the smoking substitute system 100 is a closed system vaping system, wherein the component 104 includes a sealed tank 106 and is intended for single-use only. The component 104 is removably engageable with the device 102 (i.e. for removal and replacement). Fig. 1A shows the smoking substitute system 100 with the device 102 physically coupled to the component 104, Fig. 1B shows the device 102 of the smoking substitute system 100 without the component 104, and Fig. 1C shows the component 104 of the smoking substitute system 100 without the device 102.

The device 102 and the component 104 are configured to be physically coupled together by pushing the component 104 into a cavity at an upper end 108 of the device 102, such that there is an interference fit between the device 102 and the component 104. In other examples, the device 102 and the component may be coupled by screwing one onto the other, or through a bayonet fitting.

The component 104 includes a mouthpiece (not shown in Fig. 1A, 1B or 1C) at an upper end 109 of the component 104, and one or more air inlets (not shown) in fluid communication with the mouthpiece such that air can be drawn into and through the component 104 when a user inhales through the mouthpiece. The tank 106 containing e-liquid is located at the lower end 111 of the component 104.

The tank 106 includes a window 112, which allows the amount of e-liquid in the tank 106 to be visually assessed. The device 102 includes a slot 114 so that the window 112 of the component 104 can be seen whilst the rest of the tank 106 is obscured from view when the component 104 is inserted into the cavity at the upper end 108 of the device 102.

The lower end 110 of the device 102 also includes a light 116 (e.g. an LED) located behind a small translucent cover. The light 116 may be configured to illuminate when the smoking substitute system 100 is activated. Whilst not shown, the component 104 may identify itself to the device 102, via an electrical interface, RFID chip, or barcode.

The lower end 110 of the device 102 also includes a charging connection 115, which is usable to charge a battery within the device 102. The charging connection 115 can also be used to transfer data to and from the device, for example to update firmware thereon.

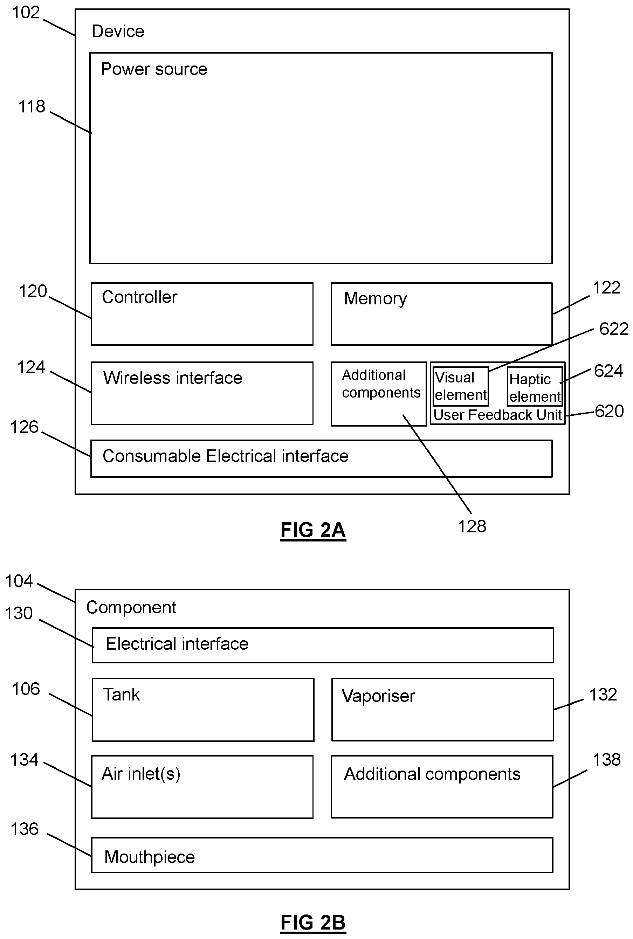

Figs. 2A and 2B are schematic drawings of the device 102 and component 104. As is apparent from Fig. 2A, the device 102 includes a power source 118, a controller 120, a memory 122, a wireless interface 124, an electrical interface 126, and, optionally, one or more additional components 128.

The power source 118 is preferably a battery, more preferably a rechargeable battery. The controller 120 may include a microprocessor, for example. The memory 122 preferably includes non-volatile memory. The memory may include instructions which, when implemented, cause the controller 120 to perform certain tasks or steps of a method.

The wireless interface 124 is preferably configured to communicate wirelessly with another device, for example a mobile device, e.g. via Bluetooth®. To this end, the wireless interface 124 could include a Bluetooth® antenna. Other wireless communication interfaces, e.g. WiFi®, are also possible. The wireless interface 124 may also be configured to communicate wirelessly with a remote server.

The electrical interface 126 of the device 102 may include one or more electrical contacts. The electrical interface 126 may be located in a base of the aperture in the upper end 108 of the device 102. When the device 102 is physically coupled to the component 104, the electrical interface 126 is configured to transfer electrical power from the power source 118 to the component 104 (i.e. upon activation of the smoking substitute system 100).

The electrical interface 126 may also be used to identify the component 104 from a list of known components. For example, the component 104 may be a particular flavour and/or have a certain concentration of nicotine (which may be identified by the electrical interface 126). This can be indicated to the controller 120 of the device 102 when the component 104 is connected to the device 102. Additionally, or alternatively, there may be a separate communication interface provided in the device 102 and a corresponding communication interface in the component 104 such that, when connected, the component 104 can identify itself to the device 102.

The device 102 includes a user feedback unit 620 which includes a visual element 622 and a haptic element 624. The visual element 622 includes at least one LED. The device body includes an illumination region configured to allow light provided by the visual element 622 to shine through the device body. The visual element 622 may be at the front and/or rear of the device body.

The additional components 128 of the device 102 may comprise the light 116 discussed above.

The additional components 128 of the device 102 also comprises the charging connection 115 configured to receive power from the charging station (i.e. when the power source 118 is a rechargeable battery). This may be located at the lower end 110 of the device 102.

The additional components 128 of the device 102 may, if the power source 118 is a rechargeable battery, include a battery charging control circuit, for controlling the charging of the rechargeable battery. However, a battery charging control circuit could equally be located in the charging station (if present).

The additional components 128 of the device 102 may include a sensor, such as an airflow (i.e. puff) sensor for detecting airflow in the smoking substitute system 100, e.g. caused by a user inhaling through a mouthpiece 136 of the component 104. The smoking substitute system 100 may be configured to be activated when airflow is detected by the airflow sensor. This sensor could alternatively be included in the component 104. The airflow sensor can be used to determine, for example, how heavily a user draws on the mouthpiece or how many times a user draws on the mouthpiece in a particular time period.

The additional components 128 of the device 102 may include a user input, e.g. a button. The smoking substitute system 100 may be configured to be activated when a user interacts with the user input (e.g. presses the button). This provides an alternative to the airflow sensor as a mechanism for activating the smoking substitute system 100.

As shown in Fig. 2B, the component 104 includes the tank 106, an electrical interface 130, a vaporiser 132, one or more air inlets 134, a mouthpiece 136, and one or more additional components 138.

The electrical interface 130 of the component 104 may include one or more electrical contacts. The electrical interface 126 of the device 102 and an electrical interface 130 of the component 104 are configured to contact each other and thereby electrically couple the device 102 to the component 104 when the lower end 111 of the component 104 is inserted into the upper end 108 of the device 102 (as shown in Fig. 1A). In this way, electrical energy (e.g. in the form of an electrical current) is able to be supplied from the power source 118 in the device 102 to the vaporiser 132 in the component 104.

The vaporiser 132 is configured to heat and vaporise e-liquid contained in the tank 106 using electrical energy supplied from the power source 118. As will be described further below, the vaporiser 132 includes a heating filament and a wick. The wick draws e-liquid from the tank 106 and the heating filament heats the e-liquid to vaporise the e-liquid.

The one or more air inlets 134 are preferably configured to allow air to be drawn into the smoking substitute system 100, when a user inhales through the mouthpiece 136. When the component 104 is physically coupled to the device 102, the air inlets 134 receive air, which flows to the air inlets 134 along a gap between the device 102 and the lower end 111 of the component 104.

In operation, a user activates the smoking substitute system 100, e.g. through interaction with a user input forming part of the device 102 or by inhaling through the mouthpiece 136 as described above. Upon activation, the controller 120 may supply electrical energy from the power source 118 to the vaporiser 132 (via electrical interfaces 126, 130), which may cause the vaporiser 132 to heat e-liquid drawn from the tank 106 to produce a vapour which is inhaled by a user through the mouthpiece 136.

An example of one of the one or more additional components 138 of the component 104 is an interface for obtaining an identifier of the component 104. As discussed above, this interface may be, for example, an RFID reader, a barcode, a QR code reader, or an electronic interface which is able to identify the component. The component 104 may, therefore include any one or more of an RFID chip, a barcode or QR code, or memory within which is an identifier and which can be interrogated via the electronic interface in the device 102.

It should be appreciated that the smoking substitute system 100 shown in figures 1A to 2B is just one exemplary implementation of a smoking substitute system. For example, the system could otherwise be in the form of an entirely disposable (single-use) system or an open system in which the tank is refillable (rather than replaceable).

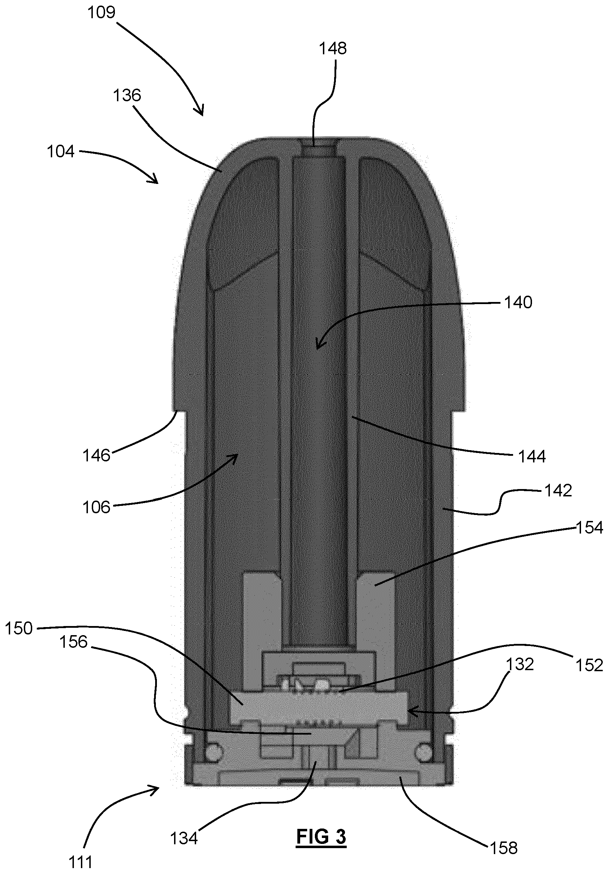

Fig. 3 is a section view of the component 104 described above. The component 104 comprises a tank 106 for storing e-liquid, a mouthpiece 136 and a conduit 140 extending along a longitudinal axis of the component 104. In the illustrated embodiment the conduit 140 is in the form of a tube having a substantially circular transverse cross-section (i.e. transverse to the longitudinal axis). The tank 106 surrounds the conduit 140, such that the conduit 140 extends centrally through the tank 106.

A tank housing 142 of the tank 106 defines an outer casing of the component 104, whilst a conduit wall 144 defines the conduit 140. The tank housing 142 extends from the lower end 111 of the component 104 to the mouthpiece 136 at the upper end 109 of the component 104. At the junction between the mouthpiece 136 and the tank housing 142, the mouthpiece 136 is wider than the tank housing 142, so as to define a lip 146 that overhangs the tank housing 142. This lip 146 acts as a stop feature when the component 104 is inserted into the device 102 (i.e. by contact with an upper edge of the device 102).

The tank 106, the conduit 140 and the mouthpiece 136 are integrally formed with each other so as to form a single unitary component and may e.g. be formed by way of an injection moulding process. Such a component may be formed of a thermoplastic material such as polypropylene.

The mouthpiece 136 comprises a mouthpiece aperture 148 defining an outlet of the conduit 140. The vaporiser 132 is fluidly connected to the mouthpiece aperture 148 and is located in a vaporising chamber 156 of the component 104. The vaporising chamber 156 is downstream of the inlet 134 of the component 104 and is fluidly connected to the mouthpiece aperture 148 (i.e. outlet) by the conduit 140.

The vaporiser 132 comprises a porous wick 150 and a heater filament 152 coiled around the porous wick 150. The wick 150 extends transversely across the chamber vaporising 156 between sidewalls of the chamber 156 which form part of an inner sleeve 154 of an insert 158 that defines the lower end 111 of the component 104 that connects with the device 102. The insert 158 is inserted into an open lower end of the tank 106 so as to seal against the tank housing 142.

In this way, the inner sleeve 154 projects into the tank 106 and seals with the conduit 140 (around the conduit wall 144) so as to separate the vaporising chamber 156 from the e-liquid in the tank 106. Ends of the wick 150 project through apertures in the inner sleeve 154 and into the tank 106 so as to be in contact with the e-liquid in the tank 106. In this way, e-liquid is transported along the wick 150 (e.g. by capillary action) to a central portion of the wick 150 that is exposed to airflow through the vaporising chamber 156. The transported e-liquid is heated by the heater filament 152 (when activated e.g. by detection of inhalation), which causes the e-liquid to be vaporised and to be entrained in air flowing past the wick 150. This vaporised liquid may cool to form an aerosol in the conduit 140, which may then be inhaled by a user.

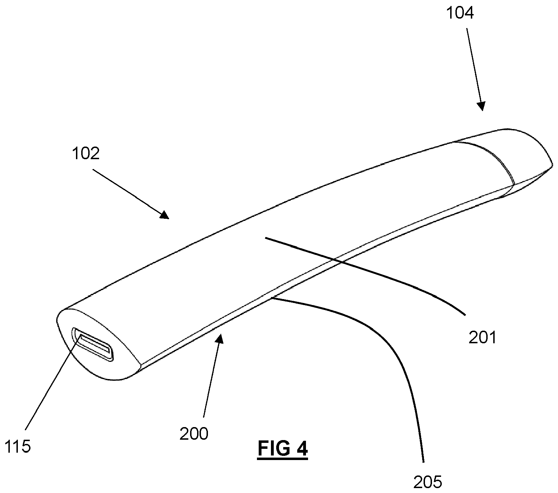

Fig. 4 shows a perspective view of an embodiment of the device 102 engaged with the component 104 at the upper end 108. The device 102 includes a charging connection 115 at the lower end 110.

The front surface 201 of the device body 200 is curved in the transverse dimension. The rear surface 202 of the device body 200 is curved in the transverse dimension. The curvatures of the front surface 201 and rear surface 202 are of the opposite sense to one another. Both front and rear surfaces 201, 202 are convex in the transverse dimension. This leads to a mandorla-/lemon-/eye-shaped cross sectional shape of the device body 200.

The front surface 201 and rear surface 202 meet at two transverse edges 205. The transverse edges 205 have a radius of curvature that is significantly smaller than the radius of curvature of either the front 201 or rear surface 202. This leads to the transverse edges being substantially "pointed" or "sharp". The transverse edges may have a radius of curvature in the transverse dimension of less than 1 millimetre.

As illustrated in Fig. 4, the transverse edges 205 extend substantially the full longitudinal length of the device body 200.

The front surface 201 of the device body 200 may include visual user feedback means.

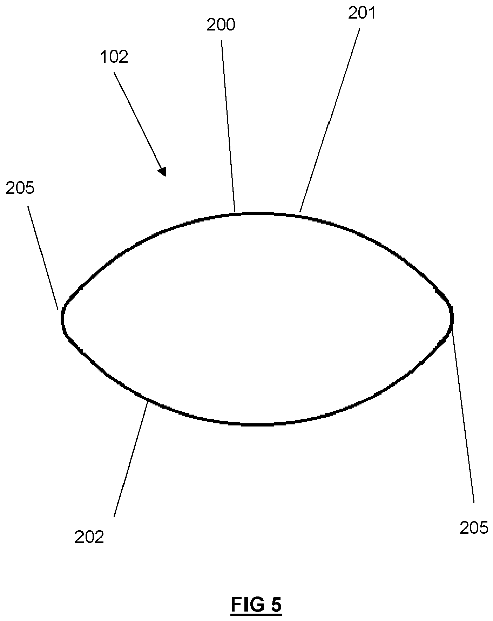

Fig. 5 illustrates a schematic transverse cross section through the device 102 of Fig. 4, in accordance with an embodiment. The front surface 201 and rear surface 202 are shown meeting at the transverse edges 205 on either side of the device body 200. The radius of curvature in the transverse dimension of the front surface 201 is equal to the radius of curvature in the transverse dimension of the rear surface 202.

The radius of curvature of the front surface 201 may be between 10 and 15 mm.

The controller 120 is configured to perform a boot sequence. In particular, the control 120 is configured to initiate the boot sequence. The controller 120 is configured to initiate the boot sequence when the power source 118 reaches 0% charge level and is connected to an electrical power supply.

The device 102 includes a user feedback element 620 which includes a visual element 622 and a haptic element 624. The visual element 622 includes at least one LED. The controller 120 is configured to cause the visual element 622 to illuminate when the boot sequence initiates. The visual element 622 includes at least one blue LED.

The controller 120 is configured to cause the visual element 622 to illuminate by pulsing at 3 second intervals and to illuminate with increasing intensity from 0% to 100% intensity at each pulse.

The controller 120 is configured to carry out the boot sequence and cause the visual element 622 to continue pulsing at 3 second intervals during the boot sequence.

The controller 120 is configured to complete the boot sequence and terminate the output feedback from the visual element (i.e. the controller 120 is configured to cause the visual element to stop illuminating).

As the boot sequence completes, the controller 120 is configured to cause the haptic element 624 to vibrate. The haptic element 624 is configured to emit a vibration pulse / burst as the boot sequence completes.

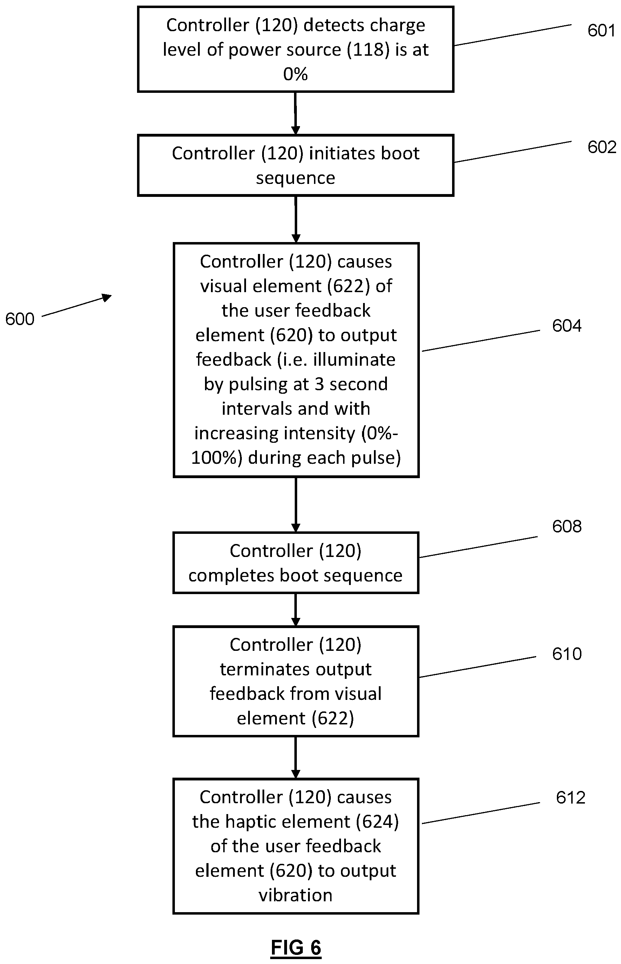

Figure 6 shows a diagram of the steps performed by the device 102 as the boot sequence is performed. The controller 120 detects the charge level of the power source 118 (step 601). As the charge level of the power source 118 reaches 0% charge level and the power source 118 is connected to an electrical power supply, the controller 120 performs the boot sequence. In particular, at step 602, the controller 120 initiates the boot sequence. As the controller 120 initiates the boot sequence the controller causes the visual element 622 to illuminate. In particular, the controller causes the visual element 622 to illuminate by pulsing at 3 second intervals and with increasing intensity (0-100%) at each pulse (step 604).

At step 608, the controller 120 completes the boot up sequence. As the controller completes the boot sequence, the controller 120 terminates illumination of the visual element 622 (step 610).

As the controller completes the boot sequence, the controller 120 also causes the haptic element 624 to vibrate with a single pulsed vibration (step 612).

While exemplary embodiments have been described above, many equivalent modifications and variations will be apparent to those skilled in the art when given this disclosure. Accordingly, the exemplary embodiments set forth above are considered to be illustrative and not limiting.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. An aerosol delivery device, comprising:
a power source having a charge level;
a controller configured to perform a boot sequence when the charge level of the power source is below a predetermined level; and
a user feedback unit
wherein the controller is configured to cause the user feedback unit to output feedback:
a) when the boot sequence initiates; and/or
b) during the boot sequence; and/or
c) when the boot sequence completes.

2. An aerosol delivery device according to claim 1, wherein the controller is configured to initiate the boot sequence when the power source is connected to an electrical power supply.

3. An aerosol delivery device according to claim 1 or 2, wherein the controller is configured to initiate the boot sequence when the power source is at a 0% charge level.

4. An aerosol delivery device according to claim 1, 2 or 3, wherein the user feedback unit comprises a visual element.

5. An aerosol delivery device according to claim 4, wherein the controller is configured to cause the visual element to illuminate when the boot sequence initiates.

6. An aerosol delivery device according to claim 4 or 5, wherein the controller is configured to cause the visual element to illuminate with a pulsed/flashing operation.

7. An aerosol delivery device according to any preceding claim, wherein the feedback unit comprises a haptic element.

8. An aerosol delivery device according to claim 7, wherein the controller is configured to cause the haptic element to vibrate when the boot sequence completes.

9. An aerosol delivery device according to any preceding claim, wherein the device is a smoking substitute device.

10. An aerosol delivery system comprising a device according to any one of the preceding claims and a component comprising an aerosol precursor.

11. A method of controlling an aerosol delivery device, the method including the steps of:
performing a boot sequence
causing a user feedback unit to output feedback:
a) when the boot sequence initiates; and/or
b) during the boot sequence; and/or
c) when the boot sequence completes.

12. A method of controlling an aerosol delivery device according to claim 11, including providing the user feedback unit with a visual element.

13. A method of controlling an aerosol delivery device according to claim 12, including causing the visual element to illuminate when the boot sequence initiates.

14. A method of controlling an aerosol delivery device according to any one of claims 11 to 13, including providing the user feedback unit with a haptic element.

15. A method of controlling an aerosol delivery device according to claim 14, including causing the haptic element to vibrate when the boot sequence completes.
